# FASCICULE DE BREVET EUROPEEN

(11) **EP 4 334 635 B1**
(45) Date de publication et mention de la délivrance du brevet: **05.03.2025**
(21) Numéro de dépôt: 22720351.0
(22) Date de dépôt: 31.03.2022
(51) Int. Cl.: F17C 9/00

(54) **DISPOSITIF DE STOCKAGE ET DE FOURNITURE DE FLUIDE CRYOGÉNIQUE, VÉHICULE ET PROCÉDÉ CORRESPONDANT**
VORRICHTUNG ZUR LAGERUNG UND BEREITSTELLUNG VON KRYOGENEM FLUID, FAHRZEUG UND ENTSPRECHENDES VERFAHREN
DEVICE FOR STORING AND SUPPLYING CRYOGENIC FLUID, VEHICLE AND CORRESPONDING METHOD

(30) Priorité: 03.05.2021 FR 2104614
(43) Date de publication de la demande: 13.03.2024
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: ALLIDIERES, Laurent, 75321 PARIS (FR); CRISPEL, Simon, 38360 SASSENAGE (FR); FAYER, Thomas, 38360 SASSENAGE (FR); GIRARD, Claire, 78350 LES-LOGES-EN-JOSAS (FR)
(74) Mandataire: Air Liquide
(86) Numéro de dépôt international: PCT/EP2022/058638
(87) Numéro de publication internationale: WO 2022/233508

(56) Documents cités:
- EP-A1- 3 690 303
- WO-A1-2015/067841
- WO-A1-2016/172803
- US-B1- 6 505 469

## Description

L'invention concerne un dispositif de stockage et de fourniture de fluide cryogénique, un véhicule comprenant un tel dispositif et un procédé correspondant.

L'invention concerne plus particulièrement un dispositif de stockage et de fourniture de fluide cryogénique, notamment dispositif embarqué de stockage et de fourniture d'hydrogène liquéfié, comprenant un réservoir cryogénique de stockage de fluide liquéfié, un circuit de soutirage, le dispositif comprenant un système de pressurisation du réservoir comprenant une conduite de pressurisation ayant deux extrémités reliées respectivement aux parties supérieure et inférieure du réservoir, un échangeur de chaleur de vaporisation et un ensemble de vanne(s) configuré pour permettre le soutirage de liquide du réservoir, son réchauffage dans l'échangeur (4) de chaleur de vaporisation et sa réintroduction dans le réservoir.

La pressurisation de réservoirs cryogéniques, notamment de semi-remorques d'hydrogène liquéfié est réalisée généralement par soutirage de liquide, vaporisation en point bas, et réinjection du gaz réchauffé en point haut du réservoir par le phénomène de thermosiphon.

Cette pressurisation augmente l'énergie interne du système et conduit à une augmentation de la pression de saturation du liquide (et de sa température). Ceci peut être problématique dans des applications où le client spécifie une température maximale de livraison du fluide.

La température du gaz injecté dans le réservoir est un paramètre important d'optimisation. Pour limiter l'énergie apportée par unité de pressurisation, il est avantageux d'injecter le gaz à la plus haute température possible et de s'assurer d'un fort gradient thermique vertical dans le réservoir (stratification) pour conserver le liquide en partie inférieure à la température la plus froide possible. Un exemple de dispositif de stockage et de fourniture de fluide cryogénique est divulgué dans le document EP 3 690 303.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que le système de pressurisation du réservoir est configuré pour soutirer un volume déterminé de fluide du réservoir, stocker et isoler ce volume dans l'échangeur de chaleur de vaporisation jusqu'à ce que le volume de fluide atteigne des conditions de température et/ou de pression déterminées avant de réinjecter ce volume de fluide dans le réservoir, la conduite de pressurisation comprenant un organe de limitation du débit et/ou de la pression du volume de fluide réinjecté.

Par ailleurs, des modes de réalisation de l'invention peuvent comporter l'une ou plusieurs des caractéristiques suivantes :
- l'ensemble de vanne(s) de la conduite de pressurisation comprend deux vannes d'isolation disposées de part et d'autre de l'échangeur de chaleur de vaporisation,
- l'organe de limitation du débit et/ou de la pression est disposé en parallèle de la vannes d'isolation située entre l'échangeur de chaleur de vaporisation et l'extrémité supérieure du réservoir,
- l'organe de limitation du débit et/ou de la pression comprend une vanne de régulation de pression à un niveau déterminé fixe ou réglable,
- l'organe de limitation du débit et/ou de la pression est constitué par une des deux vannes d'isolation et/ou une vanne distincte des deux vannes d'isolation,
- la conduite de pressurisation comprend un stockage tampon communiquant avec une sortie de l'échangeur de chaleur et configuré pour accueillir une partie du volume de fluide,
- le stockage tampon est raccordé d'une part en amont de la vanne d'isolation située entre l'échangeur de chaleur de vaporisation et l'extrémité supérieure du réservoir et, d'autre part, en aval de l'échangeur de chaleur de vaporisation,
- la conduite de pressurisation comporte une soupape de sécurité sensible à la pression ayant une première extrémité communiquant avec une sortie de l'échangeur de chaleur de vaporisation et une seconde extrémité de décharge reliée à une zone de décharge telle que l'atmosphère ou le réservoir,
- la conduite de pressurisation comporte deux échangeurs de chaleur de vaporisation disposés en parallèle,
- le dispositif comprend un contrôleur électronique programmable configuré pour piloter tout ou partie de l'ensemble de vannes et éventuellement l'organe de limitation du débit et/ou de la pression, par exemple en fonction de la pression dans le réservoir.

L'invention concerne également un véhicule, notamment camion transportant un dispositif selon l'une quelconque des caractéristiques ci-dessus ou ci-dessous.

L'invention concerne également un procédé de régulation de la pression dans un réservoir cryogénique d'un tel dispositif de stockage et de fourniture de fluide cryogénique ou d'un tel véhicule, comprenant une étape de soutirage d'un volume déterminé de fluide du réservoir, une étape de stockage et d'isolation de ce volume dans l'échangeur de chaleur de vaporisation et, lorsque le volume de fluide atteint par réchauffement spontané une température et/ou une pression prédéterminée(s), une étape de réinjection de ce volume de fluide dans le réservoir.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig.1] représente une vue en coupe schématique et partielle illustrant un premier exemple de structure et de fonctionnement d'un dispositif ne faisant pas partie de l'invention,
[Fig.2] représente une vue en coupe schématique et partielle illustrant un véhicule muni d'un deuxième exemple de structure et de fonctionnement qui est un dispositif selon l'invention,
[Fig.3] représente une vue en coupe schématique et partielle illustrant un troisième exemple de structure et de fonctionnement d'un dispositif ne faisant pas partie de l'invention.

Le dispositif 1 de stockage et de fourniture de fluide cryogénique illustré peut être un dispositif embarqué de stockage et de fourniture d'hydrogène liquéfié.

Le dispositif 1 comprend un réservoir 2 cryogénique de stockage de fluide liquéfié (par exemple un réservoir à double parois isolé sous vide) et circuit 10 de soutirage. Dans l'exemple schématique représenté le circuit de soutirage comprend une conduite de soutirage de liquide mais, bien entendu, en variante ou en combinaison, une conduite de soutirage de gaz peut être envisagée. Idem pour le remplissage (même circuit que pour soutirage ou circuit distinct).

Le dispositif 1 comprend en outre un système de pressurisation du réservoir 2 muni d'une conduite 3 de pressurisation ayant deux extrémités reliées respectivement aux parties supérieure et inférieure du réservoir 2. Cette conduite 3 de pressurisation comprend un échangeur 4 de chaleur de vaporisation et un ensemble de vanne(s) 5, 6 configuré pour permettre le soutirage de liquide du réservoir 2, son réchauffage dans l'échangeur 4 de chaleur de vaporisation et sa réintroduction dans le réservoir 2.

Selon une particularité avantageuse, au lieu d'un réchauffage via une circulation de type thermosiphon, le système de pressurisation du réservoir 2 est configuré pour soutirer un volume déterminé de fluide du réservoir 2, stocker et isoler ce volume dans l'échangeur 4 de chaleur de vaporisation jusqu'à ce que le volume de fluide atteigne des conditions de température et/ou de pression déterminées avant de réinjecter ce volume de fluide dans le réservoir 2. De plus, la conduite 3 de pressurisation comprend un organe 7 de limitation du débit et/ou de la pression du volume de fluide réinjecté.

Par exemple, le fluide emprisonné est réinjecté dans le réservoir 2 lorsque sa pression est augmentée de 10bar par rapport à ses conditions initiales et/ou lorsque son niveau de pression atteint 25bar et/ou lorsque la température a été augmentée de 50 degrés et/ ou lorsque sa température atteint 100 degrés Kelvin.

C'est-à-dire que le système de pressurisation assure une compression thermique du fluide dans l'échangeur 4 de chaleur de vaporisation pour mettre en pression le réservoir 2 en limitant l'apport d'énergie. L'injection du fluide réchauffé peut être réalisée dans le ciel gazeux du réservoir 2 via une buse limitant la dé-stratification en température du fluide dans le réservoir.

Ceci permet de maximiser la pressurisation du réservoir 2 en limitant l'apport d'énergie dans celui-ci.

Ceci permet un meilleur résultat que les solutions connues qui ne font que vaporiser le fluide et ne permette pas de réchauffer le fluide froid réinjecté (dans les systèmes connus une grande quantité de fluide doit être vaporisée avec de pressuriser le réservoir 2).

L'ensemble de vanne(s) 5, 6 de la conduite (3) de pressurisation peut comprendre à cet effet deux vannes d'isolation disposées de part et d'autre de l'échangeur 4 de chaleur de vaporisation.

Cette auto-pressurisation peut être réalisée en remplissant de liquide l'échangeur 4 de chaleur de vaporisation en ouvrant les deux vannes 5, 6 correspondantes, puis en les fermant. Après que le l'échangeur 4 (ou le fluide qu'il contient) a atteint une température prédéterminée (par exemple typiquement inférieure à 30-40K), le fluide réchauffé va faire monter la pression l'échangeur 4 de chaleur. Lorsque cette pression atteint une valeur cible (qui peut être prédéterminée par calcul ou par réglage), le fluide peut être réinjecté dans le réservoir 2.

L'organe 7 de limitation du débit et/ou de la pression peut être disposé en parallèle de la vannes 6 d'isolation située entre l'échangeur 4 de chaleur de vaporisation et l'extrémité supérieure du réservoir 2. De plus, cet organe 7 de limitation du débit et/ou de la pression peut comprendre ou être constitué d'une vanne de régulation de pression à un niveau déterminé fixe ou réglable. Cette vanne 7 de régulation peut par exemple être configurée pour s'ouvrir (automatiquement par exemple passivement ou de façon commandée) lorsque la pression dans l'échangeur 4 de vaporisation atteint la valeur cible. Cette vanne 7 de régulation va alors envoyer le fluide chaud vers le réservoir 2.

La vanne 6 d'isolation peut le cas échéant également s'ouvrir ou être pilotée.

La conduite 3 de pressurisation comporte de préférence une soupape 8 de sécurité sensible à la pression ayant une première extrémité communiquant avec au moins l'un parmi : l'extrémité supérieure du réservoir 2, une sortie de l'échangeur 4 de chaleur de vaporisation et une seconde extrémité de décharge reliée à une zone de décharge telle que l'atmosphère autour du dispositif 1 ou le ciel gazeux du réservoir 2.

Cette soupape protège le système d'une surpression pouvant endommager l'échangeur 4 de chaleur de vaporisation.

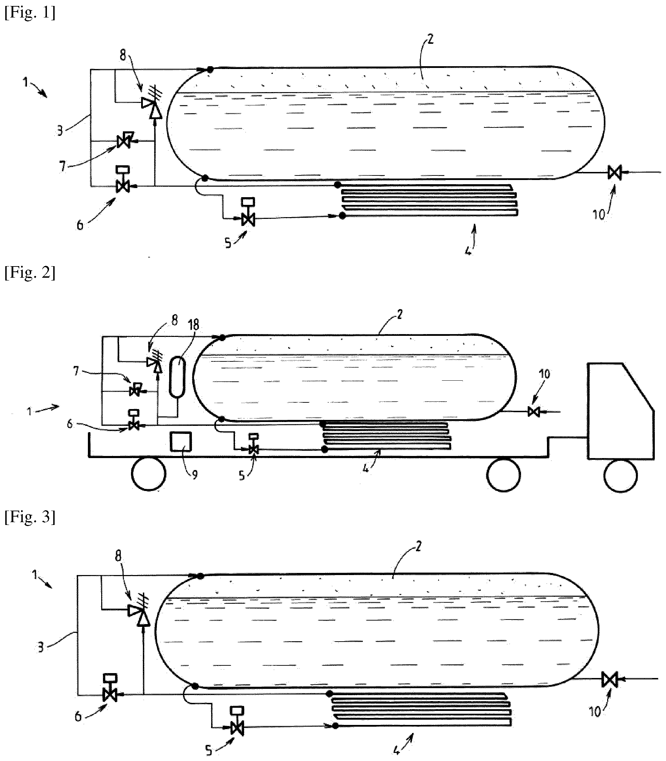

Comme illustré dans l'exemple de la [Fig.2], le dispositif 1 peut être embarqué sur un véhicule, notamment une semi-remorque.

Comme illustré également, un stockage 18 tampon supplémentaire peut être prévu dans la conduite 3. Ce stockage forme une capacité de volume réduit par rapport au volume du réservoir 2 et peut communiquer avec une sortie de l'échangeur 4 de chaleur. Ce stockage est configuré pour accueillir une partie du volume de fluide qui est emprisonné (pour augmenter ce volume au-delà du volume du seul échangeur 4 de chaleur).

Par exemple, le stockage 18 tampon est raccordé en amont à la vanne 6 d'isolation située entre l'échangeur 4 de chaleur de vaporisation et l'extrémité supérieure du réservoir 2 Ceci permet donc d'augmenter le volume de gaz sous pression disponible.

A noter que, en variante ou en combinaison, il est possible d'envisager un dispositif avec deux (ou plus) échangeurs 4 de chaleur de vaporisation (par exemple deux échangeurs de puissance ou volumes équivalents, par exemple deux fois moins puissants respectivement que dans la variante à un seul échangeur de chaleur 4 de vaporisation). Ceci peut permettre un usage séquentiel des deux échangeurs 4 de chaleur en parallèle et ainsi d'augmenter la fréquence des cycles de dépressurisation vers le réservoir. Ceci peut également améliorer la modularité du système de pressurisation, par exemple en utilisant un seul des deux échangeurs pour les pressurisations d'un premier niveau et les deux échangeurs simultanément pour les pressurisations plus élevées (notamment quand le niveau liquide est relativement bas dans le réservoir 2). Cette variante permet également de lisser les débits de réinjection de fluide chaud. En effet, un débit élevé de fluide chaud peut perturber la stratification en température du ciel gazeux du réservoir 2.

Tout ou partie de l'ensemble de vannes et éventuellement l'organe 7 de limitation du débit et/ou de la pression peut être piloté par un contrôleur 9 électronique programmable comprenant un microprocesseur et configuré à cet effet.

A noter que dans une variante de réalisation possible, l'organe 7 de limitation de débit ou de pression illustré peut être constitué par la vanne 6 d'isolation interposée entre la sortie de l'échangeur 4 de chaleur de vaporisation et la partie supérieure du réservoir 2. Par exemple, cette vanne peut être à ouverture progressive et son ouverture peut être pilotée en fonction de la pression dans l'échangeur 4 de chaleur de vaporisation. Dans ce cas, comme illustré à la [Fig.3], l'organe 7 de limitation de débit supplémentaire distinct représenté aux [Fig.1] et [Fig.2] peut être omis.

L'invention, tout en étant de structure simple et peu coûteuse, permet une pressurisation efficace et optimise l'utilisation du réchauffeur de mise en pression.

## Revendications

1. Dispositif de stockage et de fourniture de fluide cryogénique, notamment dispositif embarqué de stockage et de fourniture d'hydrogène liquéfié, comprenant un réservoir (2) cryogénique de stockage de fluide liquéfié, un circuit de soutirage (10), le dispositif (1) comprenant un système de pressurisation du réservoir (2) comprenant une conduite (3) de pressurisation ayant deux extrémités reliées respectivement aux parties supérieure et inférieure du réservoir (2), un échangeur (4) de chaleur de vaporisation et un ensemble de vanne(s) (5, 6) configuré pour permettre le soutirage de liquide du réservoir (2), son réchauffage dans l'échangeur (4) de chaleur de vaporisation et sa réintroduction dans le réservoir (2),le système de pressurisation du réservoir (2) étant configuré pour soutirer un volume déterminé de fluide du réservoir (2), stocker et isoler ce volume dans l'échangeur (4) de chaleur de vaporisation jusqu'à ce que le volume de fluide atteigne des conditions de température et/ou de pression déterminées avant de réinjecter ce volume de fluide dans le réservoir (2), la conduite (3) de pressurisation comprenant un organe (7, 6) de limitation du débit et/ou de la pression du volume de fluide réinjecté, **caractérisé en ce que** la conduite (3) de pressurisation comprend un stockage (18) tampon communiquant avec une sortie de l'échangeur (4) de chaleur et configuré pour accueillir une partie du volume de fluide.

2. Dispositif selon la revendication 1, **caractérisé en ce que** le stockage (18) tampon est raccordé d'une part en amont de la vanne (6) d'isolation située entre l'échangeur (4) de chaleur de vaporisation et l'extrémité supérieure du réservoir (2) et, d'autre part, en aval de l'échangeur (4) de chaleur de vaporisation

3. Dispositif selon la revendication 1 ou 2, **caractérisé en ce que** l'ensemble de vanne(s) (5, 6) de la conduite (3) de pressurisation comprend deux vannes d'isolation disposées de part et d'autre de l'échangeur (4) de chaleur de vaporisation.

4. Dispositif selon la revendication 3, **caractérisé en ce que** l'organe (7) de limitation du débit et/ou de la pression est disposé en parallèle de la vannes d'isolation située entre l'échangeur (4) de chaleur de vaporisation et l'extrémité supérieure du réservoir (2).

5. Dispositif selon l'une quelconque des revendications 1 à 4, **caractérisé en ce que** l'organe (7) de limitation du débit et/ou de la pression comprend une vanne de régulation de pression à un niveau déterminé fixe ou réglable.

6. Dispositif selon les revendications 3 et 5 prises en combinaison, **caractérisé en ce que** l'organe de limitation du débit et/ou de la pression est constitué par une (6) des deux vannes d'isolation et/ou une vanne (7) distincte des deux vannes (5, 6) d'isolation.

7. Dispositif selon l'une quelconque des revendications 1 à 6, **caractérisé en ce que** la conduite (3) de pressurisation comporte une soupape (8) de sécurité sensible à la pression ayant une première extrémité communiquant avec une sortie de l'échangeur (4) de chaleur de vaporisation et une seconde extrémité de décharge reliée à une zone de décharge telle que l'atmosphère ou le réservoir (2).

8. Dispositif selon l'une quelconque des revendications 1 à 7, **caractérisé en ce que** la conduite (3) de pressurisation comporte deux échangeurs (4) de chaleur de vaporisation disposés en parallèle.

9. Dispositif selon l'une quelconque des revendications 1 à 8, **caractérisé en ce qu'**il comprend un contrôleur (9) électronique programmable configuré pour piloter tout ou partie de l'ensemble de vannes (5, 6) et éventuellement l'organe (6, 7) de limitation du débit et/ou de la pression, par exemple en fonction de la pression dans le réservoir (2).

10. Véhicule, notamment camion transportant un dispositif (1) selon l'une quelconque des revendications précédentes.

11. Procédé de régulation de la pression dans un réservoir cryogénique d'un dispositif de stockage et de fourniture de fluide cryogénique conforme à l'une quelconque des revendications 1 à 9 ou d'un véhicule selon la revendication 10, comprenant une étape de soutirage d'un volume déterminé de fluide du réservoir (2), une étape de stockage et d'isolation de ce volume dans l'échangeur (4) de chaleur de vaporisation et, lorsque le volume de fluide atteint par réchauffement spontané une température et/ou une pression prédéterminée(s), une étape de réinjection de ce volume de fluide dans le réservoir (2).

## Patentansprüche

1. Vorrichtung zur Lagerung und Bereitstellung von kryogenem Fluid, insbesondere in einem Fahrzeug befindliche Vorrichtung zur Lagerung und Bereitstellung von verflüssigtem Wasserstoff, beinhaltend einen Kryobehälter (2) zur Lagerung von verflüssigtem Fluid, einen Entnahmekreislauf (10), wobei die Vorrichtung (1) ein System zur Druckbeaufschlagung des Behälters (2) beinhaltet, das eine Druckbeaufschlagungsleitung (3) beinhaltet, die zwei Enden, die jeweils mit dem oberen und unteren Teil des Behälters (2) verbunden sind, einen Verdampfungswärmetauscher (4) und einen Satz eines oder mehrerer Ventile (5, 6), der dazu konfiguriert ist, die Entnahme von Flüssigkeit aus dem Behälter (2), ihre Erwärmung in dem Verdampfungswärmetauscher (4) und ihre Rückführung in den Behälter (2) zu gestatten, aufweist, wobei das System zur Druckbeaufschlagung des Behälters (2) dazu konfiguriert ist, ein bestimmtes Fluidvolumen aus dem Behälter (2) zu entnehmen und dieses Volumen in dem Verdampfungswärmetauscher (4) zu lagern und zu isolieren, bis das Fluidvolumen bestimmte Temperatur- und/oder Druckbedingungen erreicht, bevor dieses Fluidvolumen wieder in den Behälter (2) eingespeist wird, wobei die Druckbeaufschlagungsleitung (3) ein Organ (7, 6) zur Begrenzung des Durchflusses und/oder des Drucks des wiedereingespeisten Fluidvolumens beinhaltet, **dadurch gekennzeichnet, dass** die Druckbeaufschlagungsleitung (3) einen Pufferspeicher (18) beinhaltet, der mit einem Ausgang des Wärmetauschers (4) kommuniziert und dazu konfiguriert ist, einen Teil des Fluidvolumens aufzunehmen.

2. Vorrichtung nach Anspruch 1, **dadurch gekennzeichnet, dass** der Pufferspeicher (18) einerseits stromaufwärts des Absperrventils (6), das sich zwischen dem Verdampfungswärmetauscher (4) und dem oberen Ende des Behälters (2) befindet, und andererseits stromabwärts des Verdampfungswärmetauschers (4) angeschlossen ist.

3. Vorrichtung nach Anspruch 1 oder 2, **dadurch gekennzeichnet, dass** der Satz eines oder mehrerer Ventile (5, 6) der Druckbeaufschlagungsleitung (3) zwei Absperrventile beinhaltet, die zu beiden Seiten des Verdampfungswärmetauschers (4) angeordnet sind.

4. Vorrichtung nach Anspruch 3, **dadurch gekennzeichnet, dass** das Organ (7) zur Begrenzung des Durchflusses und/oder des Drucks parallel zu dem Absperrventil angeordnet ist, das sich zwischen dem Verdampfungswärmetauscher (4) und dem oberen Ende des Behälters (2) befindet.

5. Vorrichtung nach einem der Ansprüche 1 bis 4, **dadurch gekennzeichnet, dass** das Organ (7) zur Begrenzung des Durchflusses und/oder des Drucks ein Ventil zur Regelung des Drucks auf ein bestimmtes festes oder einstellbares Niveau beinhaltet.

6. Vorrichtung nach den Ansprüchen 3 und 5 in Kombination, **dadurch gekennzeichnet, dass** das Organ zur Begrenzung des Durchflusses und/oder des Drucks aus einem (6) der zwei Absperrventile und/oder einem Ventil (7), das sich von den zwei Absperrventilen (5, 6) unterscheidet, besteht.

7. Vorrichtung nach einem der Ansprüche 1 bis 6, **dadurch gekennzeichnet, dass** die Druckbeaufschlagungsleitung (3) ein druckempfindliches Sicherheitsventil (8) umfasst, das ein erstes Ende, das mit einem Ausgang des Verdampfungswärmetauschers (4) kommuniziert, und ein zweites Auslassende, das mit einem Auslassbereich, wie etwa der Atmosphäre oder dem Behälter (2), verbunden ist, aufweist.

8. Vorrichtung nach einem der Ansprüche 1 bis 7, **dadurch gekennzeichnet, dass** die Druckbeaufschlagungsleitung (3) zwei parallel angeordnete Verdampfungswärmetauscher (4) umfasst.

9. Vorrichtung nach einem der Ansprüche 1 bis 8, **dadurch gekennzeichnet, dass** sie eine programmierbare elektronische Steuerung (9) beinhaltet, die dazu konfiguriert ist, alle oder einen Teil des Satzes Ventile (5, 6) und gegebenenfalls das Organ (6, 7) zur Begrenzung des Durchflusses und/oder des Drucks, beispielsweise in Abhängigkeit von dem Druck in dem Behälter (2), anzusteuern.

10. Fahrzeug, insbesondere Lastwagen, der eine Vorrichtung (1) nach einem der vorhergehenden Ansprüche transportiert.

11. Verfahren zur Regelung des Drucks in einem Kryobehälter einer Vorrichtung zur Lagerung und Bereitstellung von kryogenem Fluid nach einem der Ansprüche 1 bis 9 oder eines Fahrzeugs nach Anspruch 10, beinhaltend einen Schritt des Entnehmens eines bestimmten Fluidvolumens aus dem Behälter (2), einen Schritt des Lagerns und Isolierens dieses Volumens in dem Verdampfungswärmetauscher (4) und, wenn das Fluidvolumen durch spontane Erwärmung eine vorbestimmte Temperatur und/oder einen vorbestimmten Druck erreicht, einen Schritt des Wiedereinspeisens dieses Fluidvolumens in den Behälter (2).

## Claims

1. Device for storing and supplying cryogenic fluid, notably an on-board device for storing and supplying liquefied hydrogen, comprising a cryogenic tank (2) for storing liquefied fluid, a withdrawal circuit (10), the device (1) comprising a system for pressurizing the tank (2) comprising a pressurization line (3) having two ends respectively connected to the upper and lower parts of the tank (2), a vaporization heat exchanger (4) and a set of valve(s) (5, 6) configured to allow liquid to be withdrawn from the tank (2), to be heated in the vaporization heat exchanger (4) and to be reintroduced into the tank (2), the system for pressurizing the tank (2) being configured to withdraw a determined volume of fluid from the tank (2), to store and isolate this volume in the vaporization heat exchanger (4) until the volume of fluid reaches determined temperature and/or pressure conditions prior to re-injection of this volume of fluid into the tank (2), the pressurization line (3) comprising an element (7, 6) for limiting the flow rate and/or the pressure of the re-injected volume of fluid, **characterized in that** the pressurization line (3) comprises a buffer storage reservoir (18) that communicates with an outlet of the heat exchanger (4) and that is configured to accommodate part of the volume of fluid.

2. Device according to Claim 1, **characterized in that** the buffer storage reservoir (18) is attached, for the one part, upstream of the isolation valve (6) situated between the vaporization heat exchanger (4) and the upper end of the tank (2), and, for the other part, downstream of the vaporization heat exchanger (4).

3. Device according to Claim 1 or 2, **characterized in that** the set of valve(s) (5, 6) of the pressurization line (3) comprises two isolation valves disposed on either side of the vaporization heat exchanger (4).

4. Device according to Claim 3, **characterized in that** the element (7) for limiting the flow rate and/or the pressure is disposed in parallel with the isolation valve situated between the vaporization heat exchanger (4) and the upper end of the tank (2).

5. Device according to any one of Claims 1 to 4, **characterized in that** the element (7) for limiting the flow rate and/or the pressure comprises a valve for regulating pressure to a determined level that is fixed or adjustable.

6. Device according to Claims 3 and 5 considered in combination, **characterized in that** the element for limiting the flow rate and/or the pressure is constituted by one (6) of the two isolation valves and/or a valve (7) separate from the two isolation valves (5, 6).

7. Device according to any one of Claims 1 to 6, **characterized in that** the pressurization line (3) comprises a pressure-sensitive safety valve (8) having a first end communicating with an outlet of the vaporization heat exchanger (4) and a second, discharge end connected to a discharge zone such as the atmosphere or the tank (2).

8. Device according to any one of Claims 1 to 7, **characterized in that** the pressurization line (3) comprises two vaporization heat exchangers (4) disposed in parallel.

9. Device according to any one of Claims 1 to 8, **characterized in that** it comprises a programmable electronic controller (9) configured to control all or part of the set of valves (5, 6) and possibly the element (6, 7) for limiting the flow rate and/or the pressure, for example as a function of the pressure in the tank (2).

10. Vehicle, notably a lorry, transporting a device (1) according to any one of the preceding claims.

11. Method for regulating the pressure in a cryogenic tank of a device for storing and supplying cryogenic fluid according to any one of Claims 1 to 9 or of a vehicle according to Claim 10, comprising a step of withdrawing a determined volume of fluid from the tank (2), a step of storing and of isolating this volume in the vaporization heat exchanger (4) and, when the volume of fluid reaches, by spontaneous heating, a predetermined temperature and/or a predetermined pressure, a step of re-injecting this volume of fluid into the tank (2).
